Europäisches Patentamt

European Patent Office

Office européen des brevets

(11) Publication number: **0 294 728**
**A2**

(12) **EUROPEAN PATENT APPLICATION**

(21) Application number: **88108965.0**

(51) Int. Cl.⁴: **G07F 7/02**

(22) Date of filing: **04.06.88**

(30) Priority: **09.06.87 IT 6749887**

(43) Date of publication of application:
**14.12.88 Bulletin 88/50**

(84) Designated Contracting States:
**BE CH DE ES FR GB LI**

(71) Applicant: **URMET S.p.A. Costruzioni Elettro-Telefoniche**
**Via Bologna 188/C**
**I-10154 Torino(IT)**

(72) Inventor: **Mondardini, Massimo**
**Via Mazzini 40**
**I-10123 Torino(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Device and process for obliterating valued cards of the magnetic-support type.**

(57) An obliteration device comprising, in combination, a magnetic obliteration head (TM) and a mechanical means such as a toothed wheel (R) which is pushed by an actuator (EM), controlled by a microprocessor (ƥ P), into contact engagement with the magnetic support of the card to fully or partially etch and/or score the portion of support to be obliterated.

## Fig. 4

EP 0 294 728 A2

## DEVICE AND PROCESS FOR OBLITERATING VALUED CARDS OF THE MAGNETIC-SUPPORT TYPE

The present invention relates to a device and to a process for obliterating valued cards, of the magnetic-support type, particularly for telephonic use.

In the cards of the above mentioned type, usually termed debit cards, the face value of the card in terms of pulse-like magnetic signals is recorded on a magnetic support applied to the card, which can be in stiff cardboard or in polymeric material.

The obliteration of these cards has hitherto been performed exclusively with magnetic methods, by applying to the obliteration head a constant bias voltage with a duration corresponding to the portion of magnetic support to be erased; the erasing time being t = S/V, where S is the portion of support to be erased and V is the speed of advancement of the card inside the card reader.

Exclusively magnetic obliteration entails, however, highly sophisticated systems for recording the original signals to prevent the fraudulent reuse of obliterated cards; a recording system of this type - capable of ensuring the so-called intrinsic security of the card - is described for example in the prior patent No. 1.159.459 in the name of the same Applicant.

This recording system and others, though effective in terms of preventing the fraudulent reuse of obliterated cards, are not capable of providing absolute security against said reuse, require expensive and delicate equipment for the original recording and complicate the electronics of the card reader.

The aim of the present invention is to eliminate these disadvantages by providing an obliteration device capable of assuredly preventing, in a simple and reliable manner, the reuse of obliterated cards.

The present invention relates, in fact, to an obliteration device comprising, in combination with the magnetic obliteration head, a mechanical means, such as a toothed wheel or the like, which is pushed by an electromechanical actuator into contact engagement with the magnetic support in order to entirely or partially etch and/or score the portion of support to be obliterated.

The cutting or permanent deformation by scoring of the magnetic support significantly alter any signal which may possibly be rewritten on the magnetic support, so that the readout device can easily identify an attempt at fraudulent reuse of an obliterated card.

Preferably, according to the present invention, the mechanical obliteration is performed only on part of the portion of support which is employed, and more specifically only part of the space of the magnetic support corresponding to the last (complete) set of ten used phone-rate units.

This has the double advantage of reducing the energy expended for the actuation of the obliteration wheel and of avoiding the removal of material of the support, with consequent possible inefficiency of the wheel.

Advantageously, the mechanical obliteration wheel is actuated for a time which depends on the advancement speed of the card and such that the etched or scored support region has an extension of approximately 3 millimeters.

The etched or scored region is also used to provide the user with an approximate visual indication, for example to less than the unit of the percentage of residual validity of the card, and for this purpose a percentage-graduated scale is printed laterally to the magnetic support.

The obliteration wheel is supported at the end of a rocker controlled by an actuator electromagnet which is energized, by means of a power interface, by the actuation pulse emitted by a microprocessor of the reader, programmed to take into account the nominal value attributed to each pulse according to the face value of the card, as will become apparent hereinafter.

Further characteristics and advantages of the invention will become apparent from the following detailed description and with reference to the accompanying drawings, given merely by way of non-limitative example, wherein:

figure 1 is a schematic view of the combined magnetic and mechanical obliteration system according to the present invention;

figure 2 is a schematic view of the valued card (debit card) subjected to the obliteration system according to the invention;

figure 3 is a diagram illustrating by way of comparison two different values, in terms of pulses attributed to each telephone-rate unit, for cards having different face values; and

figure 4 is an electrical block diagram of the system for activating the obliteration wheel.

In the present description (figure 3) a distinction is made between the units sc, which are for example telephone-rate units, and the pulses im recorded on the magnetic support SM of a card SK; each unit being formed by a preset number of pulses determined according to the face value of the card and to the value in coins (or in equivalent tokens) attributed to each unit. A field G of the magnetic support SM is intended for the recording of the pulses, the constant number whereof, e.g. 150, is set according to the dimensions of the card, to the minimum spacing required to ensure the correct readout of said pulses and to arithmetical factors of divisibility of the pulses.

The monetary (or equivalent token) value of each unit is recorded, for example in the form of pulses in binary code, in a second field B of the magnetic support, and the number of pulses which form the unit is similarly recorded in a third field A.

The following examples refer to three cards with different face values:

| field C | field B | field A | card value |
|---|---|---|---|
| 1) 150 pulses | Lit. 200 | 6 pulses | Lit. 5,000 |
| 2) 150 pulses | Lit. 200 | 3 pulses | Lit. 10,000 |
| 3) 150 pulses | Lit. 400 | 3 pulses | Lit. 20,000 |

One can easily understand that the distance K between the units of the card of example 1 will be different from the distance K1 between the units of cards 2 and 3, since, in particular, K1/K = 0.5.

Upon the insertion of the card, the reader sends to the microprocessor $\mu$P, which is part of the readout electronics, the data recorded in fields A and B to identify the type of card.

The obliteration of the card occurs by decreasing the pulses recorded in the field C of the magnetic support.

According to the present invention this obliteration occurs as a combined effect of a magnetic head TM and of a wheel R capable of etching the support SM with its own active surface SR, for example a toothed surface, by virtue of the energizing of a control system SC which pushes the wheel into forced contact engagement against the support SM.

The magnetic obliteration is produced by a constant bias voltage applied by the microprocessor $\mu$P to the head TM for a time T1 which is the result of the relation $T1 = \frac{Z}{V}$, where Z is the portion of band to be obliterated corresponding to the number of pulses actually used and V is the speed of advancement of the card SK moved within the reader by a rotatable support roller RU.

The microprocessor $\mu$P also performs the energizing of the wheel actuation system SC with a basic delay $\tau$, with respect to the bias of the head TM, given by $\tau = \frac{d}{V}$, where d is the distance which separates the polar expansion of the head TM from the point of tangency of the wheel R on the magnetic support.

The etching or mechanical scoring produced by the wheel R is in any case limited to portions Za of the magnetic support comprising a constant and whole number of units, preferably ten, and can affect the entire region nZa (already magnetically obliterated) of the support. Anyway, and advantageously, in order to reduce the energy expended for the activation of the wheel and to avoid the removal of the material of the magnetic support, only a short final portion of the region nZa is etched or scored and therefore, more specifically, only a part of the magnetic support, comprised in the region corresponding to the last entirely used set of ten units, is etched or scored. Thus, for example, if the used units are 34, a region of the magnetic support located at the third set of ten units is obliterated. The actuation system SC is correspondingly energized for a time t2 = h/V such that the extension h of the etching is approximately four millimeters; V being the speed of advancement of the card; and the delay tx with which the system SC is energized with respect to the bias of the head TM becomes tx = $\tau$ + ty, ty = nZa/V being the time in which the region of magnetic support to be mechanically obliterated reaches the wheel R. Since, as previously mentioned, the spacing K between the units differs according to the face value of the card which is introduced, the extension of the portions Za is also variable as illustrated by Z'a in figure 3. Consequently the time ty and the total delay tx must be correspondingly changed according to said face value. This variation is performed by the microprocessor $\mu$P after it has recognized the type of card by means of the data recorded in the fields A and B thereof.

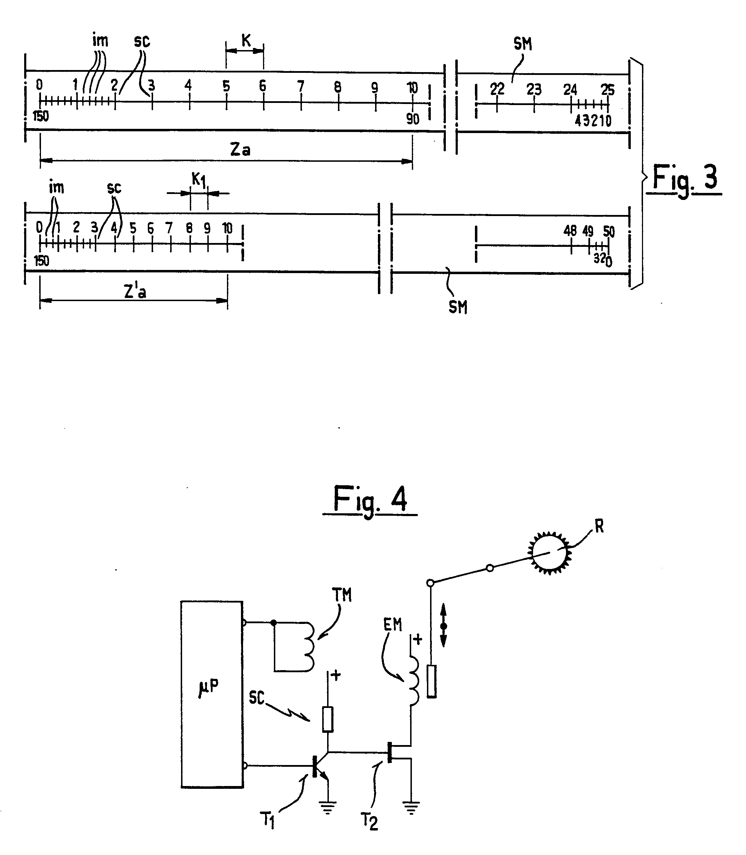

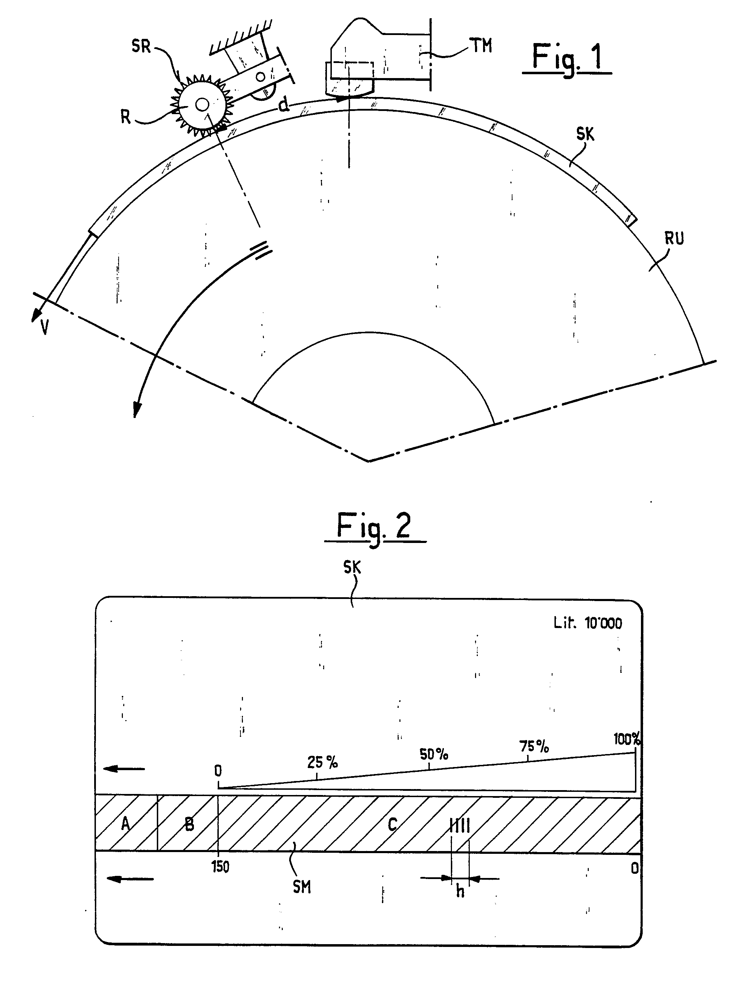

As is clearly illustrated in figure 2, the mechanical obliteration of the last entirely used set of ten units allows to provide an approximate visual indication (to less than a unit) of the percentage of residual validity of the card SK. For this purpose a validity scale SV, graduated in percentages, is printed laterally to the magnetic support SM and at the field A thereof.

Advantageously, according to the invention the wheel actuation system SC comprises an electromagnet EM acting at the end of a rocker level L at the other end whereof the wheel R is rotatably supported. As mentioned previously, the electromagnet EM is energized by a pulse of the microprocessor $\mu$P by means of a power interface, for example constituted by a pair of transistors T1-T2 connected in a per se known manner as clearly illustrated in figure 4.

Naturally, the concept of the invention remaining invariant, the details of execution and the embodiments may be extensively varied, with respect to what is described and illustrated only by way of non-limitative example, without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for the obliteration of valued cards (SK) of the magnetic-support type, characterized in that it comprises, in combination, a magnetic obliteration head (TM) and a mechanical means (R) pushed by an actuator (SC, EM) into contact engagement with the magnetic support (SM) to fully or partially etch and/or score the portion of support (SM) to be obliterated.

2. Device according to claim 1, characterized in that said mechanical means is constituted by a wheel (R) having an active surface (SR) capable of etching and/or scoring the magnetic support (SM).

3. Device according to claim 2, characterized in that the active surface (SR) of the wheel (R) is toothed.

4. Device according to claims 1 to 3, characterized in that said wheel (R) is supported freely rotatable at the end of a rocker controlled, at its other end, by an actuator electromagnet (EM) energized, by means of a power interface (T1, T2), by a microprocessor ($\mu$ P) adapted to introduce a delay in the intervention of the wheel (R) with respect to the intervention of the magnetic erasing head (TM), which is also biased by an actuation of the microprocessor ($\mu$ P).

5. Device according to claim 4, wherein the microprocessor ($\mu$ P) introduces a basic delay ($\tau$) determined by the speed of advancement of the card (SK) and by the distance between the polar expansion of the erasing heads (TM) and the point of tangency between the wheel (R) and the magnetic support (SM); the wheel (R) being activated for such a time as to produce the mechanical obliteration of the entire magnetic support region (SM) composed of portions comprising a constant and whole number of units, preferably ten units.

6. Device according to claim 4, wherein the microprocessor ($\mu$ P) introduces a delay (tx) given by the sum of the basic delay ($\tau$) and additional time (ty), to produce mechanical obliteration of a single terminal region of the section of magnetic support (SM) composed of portions comprising a whole and constant number of units; the wheel (R) being active for a time (t2 = h/V) such that the extension (h) of the etching is comprised between three and four millimeters.

7. Device according to claim 6, characterized in that the additional time (ty) of the delay is variable according to the face value of the card (SK) and to the consequent number of pulses attributed to each unit.

8. Device according to claims 6 and 7, characterized in that the additional delay time (ty) introduced by the microprocessor ($\mu$ P) is such that the obliteration wheel (R) is activated at the last entirely used set of ten units; the partial etching of the support (SM) being adapted to provide an approximate visual indication of the residual validity of the card (SK) by comparison with a scale provided on the card (SK) itself laterally to the magnetic support (SM) and graduated in percentages.

9. Process for the obliteration of valued cards (SK) of the magnetic-support type, characterized in that it consists of providing the magnetic obliteration of all used pulses corresponding to whole numbers of units and to fractions of unit and of providing a mechanical obliteration, by corresponding mechanical alteration of a section of the magnetic support (SM), at the last entirely used set of ten units.

Fig. 3

Fig. 4

## Fig. 1

SR

R

TM

SK

RU

V

d

## Fig. 2

SK

Lit. 10'000

0   25 %   50%   75%   100%

A   B   C   HII

150

SM

h

0